# EUROPEAN PATENT SPECIFICATION

(11) **EP 4 307 420 B1**
(45) Date of publication and mention of the grant of the patent: **26.11.2025**
(21) Application number: 22930175.9
(22) Date of filing: 31.05.2022
(51) Int. Cl.: H01M 10/054, H01M 4/525, C01G 53/00

(54) **LAYERED OXIDE AND PREPARATION METHOD THEREFOR, POSITIVE ELECTRODE SHEET, SECONDARY BATTERY, BATTERY MODULE, BATTERY PACK AND ELECTRICAL APPARATUS**
GESCHICHTETES OXID UND HERSTELLUNGSVERFAHREN DAFÜR, POSITIVELEKTRODENFOLIE, SEKUNDÄRBATTERIE, BATTERIEMODUL, BATTERIEPACK UND ELEKTRISCHE VORRICHTUNG
OXYDE EN COUCHES ET SON PROCÉDÉ DE PRÉPARATION, PLAQUE D'ÉLECTRODE POSITIVE, BATTERIE SECONDAIRE, MODULE DE BATTERIE, BLOC-BATTERIE ET DISPOSITIF ÉLECTRIQUE

(43) Date of publication of application: 17.01.2024
(73) Proprietor: Contemporary Amperex Technology (Hong Kong) Limited, Central, Central And Western District (HK)
(72) Inventor: LIANG, Zibin, Ningde, Fujian 352100 (CN); WANG, Yuhao, Ningde, Fujian 352100 (CN); LIN, Wenguang, Ningde, Fujian 352100 (CN); ZHANG, Xinxin, Ningde, Fujian 352100 (CN); HE, Jinhua, Ningde, Fujian 352100 (CN)
(74) Representative: Gong, Jinping
(86) International application number: PCT/CN2022/096195
(87) International publication number: WO 2023/230825

(56) References cited:
- WO-A1-2019/197812
- CN-A- 104 795 552
- CN-A- 104 795 561
- CN-A- 111 435 741
- CN-B- 104 795 560

## Description

### TECHNICAL FIELD

The present application relates to the technical field of batteries, and more particularly relates to a layered oxide and a preparation method thereof, a positive electrode sheet, a secondary battery, a battery module, a battery pack and an electrical apparatus.

### BACKGROUND

As an important means of energy storage and conversion, the secondary battery technology is widely applied to many aspects such as daily life of people, industrial production, military defense and aerospace. At present, lithium-ion batteries, which are the fastest-growing and most mature in technology in a secondary battery system, have received widespread attention. The secondary battery system represented by the lithium-ion batteries has become a power source for various portable electronic devices and all-electric vehicles, which has greatly promoted the development of electronic products and the electric vehicle industry. However, lithium resources in the earth's crust are very limited. According to statistics, the current global lithium carbonate reserves are about 13 million tons, while the annual consumption of lithium carbonate is increasing at an annual growth rate of 16.5%. It is estimated that the global lithium resources are only available for people in next 28 years, which will severely restrict the further development of the lithium-ion batteries and energy storage technologies.

Sodium and lithium have similar physical and chemical properties, but the radius of sodium ions is larger than that of lithium ions, which causes the performance of sodium-ion batteries to be inferior to the performance of the lithium-ion batteries. However, the reserves of sodium in the earth's crust are much larger than those of lithium, which makes the sodium-ion batteries have natural advantages in terms of cost and supply.

A positive electrode material of the sodium-ion battery is an important component of the sodium-ion battery, responsible for providing active sodium ions and requiring a high redox potential. The activity of the positive electrode material will directly affect the capacity and operating voltage of the battery. For layered transition metal oxides, according to the content of the sodium and the position of the sodium in a material crystal structure, major layered materials that are currently studied can be mainly divided into an O3 type and a P2 type. Compared with P2-type layered materials, O3-type layered materials have the main advantages of a higher sodium content, resulting in high first-cycle discharge specific capacity and providing more active sodium during film forming of negative electrode hard carbon in a full battery.

The O3-NaNi_{0.4}Mn_{0.4}Fe_{0.2}O₂material is a transition metal-based layered oxide positive electrode material with a high sodium content. Usually, the positive electrode material has good cycle stability when the charging voltage is between 2.0 V and 4.0 V. Therefore, only a relatively limited capacity can be provided. In the state of deep charge and discharge, especially when the charging voltage is increased to 4.0 V or above, oxygen in the layered oxide loses electrons at the high voltage, resulting in the formation of a hole, which is highly unstable and prone to side reactions, and then, structure damage and oxygen losses happen, causing reduction of the specific capacity and coulombic efficiency, and poor cycle stability.

CN104795560A describes a sodium-rich P2-phase layered oxide material and a preparation method and an application thereof.

WO2019/197812A1 describes a O3/P2 mixed-phase sodium-containing doped layered oxide materials.

### SUMMARY OF THE INVENTION

The present application provides a layered oxide as defined in claims 1 to 10, and a preparation method thereof as defined in claims 11 and 12, a positive electrode sheet as defined in claim 13, a secondary battery as defined in claim 14, and an electrical apparatus as defined in claim 15, so as to solve the problems that a layered transition metal oxide positive electrode material is likely to generate instable local holes in oxygen under a high voltage, which causes poor specific capacity and coulombic efficiency.

The first aspect of the present application provides a layered oxide, including an oxide with the general formula NaₓMn_{y}AₐQ_{b}C_{c}O₂, where A contains Fe and Ni; Q is one or more of transition metal elements containing 3d or 4d orbital electrons except Fe and Ni; C is one or two of Al and B, 0.66<x≤1, 0.2≤y <0.6, 0.3≤a≤0.6, 0<b<0.2, 0<c≤0.1, and 1≤b/c≤100.

As known in the art, the values of x, y, a, b and c are within the above range so that the valence of an oxide with the general formula NaₓMny_{Aa}Q_{b}C_{c}O₂ is zero.

The above-mentioned layered oxide may be used as a positive electrode material. In the NaₓMny_{Aa}Q_{b}C_{c}O₂ oxide of the present application, the A element undergoes valence changes to provide charge compensation in a charge and discharge process, thereby improving the specific capacity of the layered oxide; Q is one or more of transition metal elements containing 3d or 4d orbital electrons except Fe and Ni, a d orbital of the Q element and a 2p orbital of oxygen in the oxide are hybridized to form a hybrid orbital, and a local hole in oxygen may be stabilized by the hybrid orbital, thereby inhibiting irreversible oxygen losses and structure collapse of oxygen under the high voltage; meanwhile, the C element in an ionic state has a high ionic potential and highly interacts with oxygen, its bonding with oxygen has a high covalent bond component, which can effectively inhibit oxygen losses; and further, 1≤b/c≤100, and the Q element and the C element are matched so as to effectively inhibit oxygen and metal losses during sodium deintercalation under the high voltage, thereby further improving structural stability of the oxide NaₓMn_{y}AₐQ_{b}C_{c}O₂, and then improving the specific capacity and coulombic efficiency of the layered oxide.

In any embodiment of the first aspect, the Q is one or more of the group consisting of Cu, Zn, Y and Ti. When the Q is selected from the above transition metal, the hybrid orbital formed by the d orbital of the Q and the 2p orbital of oxygen may greatly stabilize the local hole in oxygen, and thus, the inhibition effect on the irreversible oxygen losses is better.

In the first aspect, the A contains Fe and Ni, so as to utilize iron and nickel at the same time to provide stable charge compensation.

In any embodiment of the first aspect, the phase state of the above-mentioned layered oxide is an O3 phase, and the space group is R3m. The O3-phase layered oxide has a higher Na content, and thus has a higher initial charge specific capacity.

In any embodiment of the first aspect, an interlayer distance d₀₀₃ of a (003) crystal face of the above-mentioned layered oxide is 0.53 nm to 0.55 nm, such that the structure of the layered oxide is more stable.

In any embodiment of the first aspect, the intensity of a (003) characteristic peak in an X-ray diffraction spectrum of the layered oxide before soaking is I0, the intensity of the (003) characteristic peak in the X-ray diffraction spectrum of the layered oxide after 24 h room-temperature soaking in water is I1, and I1/I0≤0.2. I1/I0≥0.2 indicates good water stability of the layered oxide, which results in a high energy density and good cycle performance of a sodium-ion battery containing the layered oxide.

In any embodiment of the first aspect, the pH value of a layered oxide aqueous solution with a mass concentration of 10% is between 11 and 13. When the pH value is low, sizing and coating are easy during positive electrode slurry preparation. For example, if the pH value is too high, gel formation and difficult coating are caused in the sizing process.

In any embodiment of the first aspect, the volume average particle size Dᵥ₅₀ of the layered oxide is 3 µm to 30 µm, optionally, 5 µm to 15 µm.

In any embodiment of the first aspect, the specific surface area BET of the layered oxide is 0.1 m²/g to 5 m²/g, optionally, 0.3 m²/g to 3 m²/g.

In any embodiment of the first aspect, the tap intensity of the layered oxide is 1 g/cm³ to 3 g/cm³, optionally, 1.5 g/cm³ to 2.5 g/cm³.

In any embodiment of the first aspect, the powder compaction density of the above-mentioned layered oxide under the pressure of 300 MPa is 3.0 g/cm³ to 4.0 g/cm³.

When any one of the volume average particle size Dᵥ₅₀ of the layered oxide, the specific surface area BET, the tap density or the powder compaction density under the pressure of 300MPa is within the above range, the conduction distance of sodium ions in particles is short, and the surface side reaction is less, which are conducive to the material to have a better gram capacity, and as a result, the cycle performance of the battery using the material is excellent.

A second aspect of the present application provides a preparation method of a layered oxide. The preparation method includes: step S1: mixing a Na source, a Mn source, an A source, a Q source and a C source to obtain a precursor powder, where the Na source, the Mn source, the A source, the Q source and the C source are mixed according to the molar ratio of Na:Mn:A:Q:C being (0.85-1.2):(0.2-0.6):(0.3-0.6): (0-0.2): (0-0.1), the mole number of Q and C is not 0, an A element in the A source contains Fe and Ni, a Q element in the Q source is one or more of transition metal elements containing 3d or 4d orbital electrons except Fe and Ni, and a C element in the C source is one or two of Al and B; and step S2: calcining the precursor powder in an oxidizing atmosphere and crushing the resulting material to obtain the layered oxide. The preparation method is implemented by a solid-phase method, and the operation is simple and easy to implement. During calcination, part of the Na source is burnt, and therefore, there is a moderate excess of Na source during batching, so as to ensure that the obtained layered oxide contains more sodium elements as many as possible on the basis that the transition metal elements and the C element in the above ratio are contained.

Using the above preparation method, the layered oxide with the general formula NaₓMn_{y}AₐQ_{b}C_{c}O₂ can be obtained, where 0.66<x≤1, 0.2≤y≤0.6, 0.3<a<0.6, 0< b<0.2, 0<c≤0.1, and 1≤b/c≤100. In the layered oxide with the general formula NaₓMn_{y}AₐQ_{b}C_{c}O₂, the A element undergoes valence changes to provide charge compensation in a charge and discharge process, thereby improving the specific capacity of the layered oxide; Q is one or more of transition metal elements containing 3d or 4d orbital electrons except Fe and Ni, a d orbital of the Q element and a 2p orbital of oxygen in the oxide are hybridized to form a hybrid orbital, and a local hole in oxygen may be stabilized by the hybrid orbital, thereby inhibiting irreversible oxygen losses and structure collapse of oxygen under the high voltage; meanwhile, the C element in an ionic state has a high ionic potential and highly interacts with oxygen, and its bonding with oxygen has a high covalent bond component, which can effectively inhibit oxygen losses; and further, 1≤b/c≤100, and the Q element and the C element are matched so as to effectively inhibit oxygen and metal losses during sodium deintercalation under the high voltage, thereby further improving structural stability of the oxide NaₓMn_{y}AₐQ_{b}C_{c}O₂, and then improving the specific capacity and coulombic efficiency of the layered oxide.

In any embodiment of the second aspect, step S1 implements mixing by a ball milling or mechanical stirring method. Ball milling and mechanical stirring both can realize sufficient mixing of various substances, and particularly, ball milling, under a certain ball milling condition, may realize more sufficient mixing.

In any embodiment of the second aspect, the Na source is selected from one or more of the group consisting of Na₂CO₃, NaHCO₃, NaOH and Na₂O₂; optionally, the Mn source is selected from one or more of the group consisting of Mn₂O₃, Mn₃O₄, MnO and MnO₂; optionally, the A source is selected from one or more of the group consisting of A oxides and salts containing the A element, and the A element contains Fe and Ni; optionally, the Q source is one or more of the group consisting of Q oxides and salts containing the Q element, and optionally, the Q element is selected from one or more of the group consisting of Cu, Zn, Y and Ti; and optionally, the C source is one or more of the group consisting of C oxides and salts containing the C element. The above raw materials are extensive in source and low in cost.

In any embodiment of the second aspect, the above oxidizing atmosphere is selected from air, oxygen, mixed gas of air and oxygen, and mixed gas of oxygen and inert gas. The oxidizing atmosphere is used to fully oxidize the Mn element, the A element, the Q element, and the C in the calcination process, so as to achieve a more excellent coordination between ion orbitals.

In any embodiment of the second aspect, the above calcination temperature is 700°C to 1000°C, and the heat preservation time of calcination is 10 h to 30 h; optionally, step S2 includes a first calcination stage and a second calcination stage sequentially performed, the calcination temperature in the first calcination stage is 400°C to 900°C, and the heat preservation time in the first calcination stage is 2 h to 20 h; and the calcination temperature in the second calcination stage is 700°C to 1000°C, and the heat preservation time in the second calcination stage is 10 h to 30 h. In the first calcination stage, the raw materials may be made to react preliminarily at a low temperature to form the layered oxide, elements in the layered oxide are diffused uniformly in advance, while the temperature in the second calcination stage is high, which can further improve the crystallinity of the layered oxide, and further promote the diffusion of different elements. Compared with the conditions of single calcination, a product obtained by two-stage calcination is more uniform in element distribution and better in crystallinity.

A third aspect of the present application provides a positive electrode sheet, including a positive electrode current collector and a positive electrode film layer arranged on at least one surface of the positive electrode current collector. The positive electrode film layer includes a positive electrode active material. The positive electrode active material includes any layered oxide in the first aspect or the layered oxide prepared by any preparation method in the second aspect. Optionally, based on the total weight of the positive electrode film layer, the content of the layered oxide in the positive electrode film layer is 60 wt% or above, optionally, 80 wt% to 98 wt%. The layered oxide is used as the positive electrode active material in the positive electrode film layer. Due to the stable structure of the layered oxide of the present application, irreversible oxygen and metal losses are not likely to occur even in the process of sodium deintercalation under the high voltage, thereby providing high specific capacity and coulombic efficiency for the positive electrode sheet.

A fourth aspect of the present application provides a secondary battery, including any layered oxide in the first aspect, or the layered oxide prepared by any preparation method in the second aspect, or the positive electrode sheet in the third aspect.

A fifth aspect of the present application provides a battery module, including the secondary battery which is the secondary battery in the fourth aspect.

A sixth aspect of the present application provides a battery pack, including the battery module which is the battery module in the fifth aspect.

A seventh aspect of the present application provides an electrical apparatus, including the secondary battery or the battery module or the battery pack, where the secondary battery is selected from the secondary battery in the fourth aspect, the battery module is the battery module in the fifth aspect, or the battery pack is the battery pack in the sixth aspect.

The characteristics of the layered oxide of the present application make the secondary battery, the battery module, and the battery pack with the layered oxide have high cycle performance, first-cycle coulombic efficiency and specific capacity, so as to provide high power cycle stability for the electrical apparatus with the secondary battery, the battery module or the battery pack of the present application.

### DESCRIPTION OF DRAWINGS

In order to illustrate the technical solutions of the examples of the present application more clearly, the drawings required in the examples of the present application are briefly introduced below. Obviously, the drawings described below are only some examples of the present application. For those of ordinary skill in the art, other drawings can also be obtained according to the drawings without any creative effort.
Fig. 1 illustratesa discharge capacity C1 of a button battery and a charge capacity C0 of the button battery obtained in a test of Example 1.
Fig. 2 illustrates a discharge capacity C1 of a button battery and a charge capacity C0 of the button battery obtained in a test of Comparative Example 1.
Fig. 3 illustrates a capacity retention rate of the button battery after cycling of 50 cycles in the tests of Example 1 and Comparative Example 1.
Fig. 4 illustrates a SEM image obtained after cycling of 50 cycles of the layered oxide in Example 1.
Fig. 5 illustrates a SEM image obtained after cycling of 50 cycles of the layered oxide in Comparative Example 1.
Fig. 6 is a schematic diagram of a secondary battery according to an embodiment of the present application.
FIG. 7 is an exploded diagram of the secondary battery according to the embodiment of the present application as shown in Fig. 6.
Fig. 8 is a schematic diagram of a battery module according to an embodiment of the present application.
Fig. 9 is a schematic diagram of a battery pack according to an embodiment of the present application.
Fig. 10 is an exploded diagram of the battery pack according to the embodiment of the present application shown in Fig. 9.
Fig. 11 is a schematic diagram of an electrical apparatus with a secondary battery in one embodiment of the present application as a power source.

In the drawings, the drawings are not drawn to actual scale.

### Description of reference numerals:

1-battery pack; 2-upper box; 3-lower box; 4-battery module; 5-secondary battery; 51-case; 52-electrode assembly; and 53-top cover assembly.

### DETAILED DESCRIPTION

The embodiments of the present application are further described in detail below in combination with the drawings and embodiments. The detailed description of the following examples and the drawings are used to illustrate the principles of the present application by way of example, but should not be used to limit the scope of the present application, that is, the present application is not limited to the described examples.

Hereinafter, embodiments of a layered oxide, a preparation method thereof, a positive electrode sheet, a secondary battery, a battery module, a battery pack, and an electrical apparatus which are specifically disclosed by the present application will be described in detail with reference to the drawings as appropriate. However, there are situations where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

The "range" disclosed in the present application is defined in terms of lower and upper limits, and a given range is defined by selecting a lower limit and an upper limit, which define the boundaries of a particular range. A range defined in this manner may be inclusive or exclusive of end values, and may be arbitrarily combined, that is, any lower limit may be combined with any upper limit to form a range. For example, if ranges of 60 to 120 and 80 to 110 are listed for a particular parameter, it is understood that ranges of 60 to 110 and 80 to 120 are also contemplated. Additionally, if minimum range values 1 and 2, and maximum range values 3, 4 and 5 are listed, all the following ranges may be contemplated: 1-3, 1-4, 1-5, 2-3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers in the range of "0-5" have been listed herein, and "0-5" is just an abbreviated representation of the combination of these numerical values. Additionally, when it is stated that a certain parameter is an integer of ≥2, it is equivalent to disclosing that the parameter is, for example, an integer of 2, 3, 4, 5, 6, 7, 8, 9, 10, 11, 12, etc.

Unless otherwise specified, all embodiments and optional embodiments of the present application may be combined with each other to form new technical solutions.

Unless otherwise specified, all technical features and optional technical features of the present application can be combined with each other to form new technical solutions.

Unless otherwise specified, all steps of the present application may be performed sequentially or randomly, and optionally sequentially. For example, the method comprises steps (a) and (b), meaning that the method may comprise steps (a) and (b) performed sequentially, or may comprise steps (b) and (a) performed sequentially. For example, the reference to the method may further comprise step (c), meaning that step (c) may be added to the method in any order, for example, the method may comprise steps (a), (b) and (c), or may comprise steps (a), (c) and (b), or may comprise steps (c), (a) and (b), and so on.

Unless otherwise specified, the terms "include/including" and "comprise/comprising" mentioned in the present application may be open-ended or closed-ended. For example, the "including" and "comprising" may indicate that it is possible to include or comprise other components not listed, and it is also possible to include or comprise only the listed components.

Unless otherwise specified, the term "or" is inclusive in the present application. By way of example, the phrase "A or B" means "A, B, or both A and B". More particularly, the condition "A or B" is satisfied by any one of the following conditions: A is true (or present) and B is false (or absent); A is false (or absent) and B is true (or present); or both A and B are true (or present).

### [Secondary battery]

Secondary batteries, also known as rechargeable batteries or storage batteries, refer to batteries that, after being discharged, can activate active materials by charging for continuous use.

Generally, the secondary battery includes a positive electrode sheet, a negative electrode sheet, a separator and an electrolyte solution. During charging and discharging of the battery, active ions (e.g., lithium ions or sodium ions) are intercalated and deintercalated back and forth between the positive electrode sheet and the negative electrode sheet. The separator is arranged between the positive electrode sheet and the negative electrode sheet, and mainly has functions of preventing a short circuit between a positive electrode and a negative electrode while allowing active ions to pass through. The electrolyte solution mainly has a function of conducting the active ions between the positive electrode sheet and the negative electrode sheet.

### [Layered oxide]

An embodiment of the present application provides a layered oxide, which includes an oxide with the general formula NaₓMn_{y}AₐQ_{b}C_{c}O₂, where A contains Fe and Ni ; Q is one or more of transition metal elements containing 3d or 4d orbital electrons except Fe and Ni; C is one or two of Al and B, 0.66<x≤1, for example, x is 0.67, 0.70, 0.75, 0.80, 0.85, 0.90, 0.95 or 1; 0.2<y<0.6, for example, a is 0.2, 0.3, 0.4, 0.5 or 0.6; 0.3≤a≤0.6, for example, a is 0.3, 0.4, 0.5 or 0.6; 0< b<0.2, for example, b is 0.01, 0.05, 0.1, 0.15 or 0.2; 0<c≤0.1, for example, c is 0.01, 00.02, 0.03, 0.04, 0.05, 0.06, 0.07, 0.08, 0.09 or 0.1; and 1≤b/c≤100, for example, b/c is 1, 5, 10, 20, 30, 40, 50, 60, 70, 80, 90 or 100.

The above-mentioned layered oxide may be used as a positive electrode material.

In the NaₓMny_{Aa}Q_{b}C_{c}O₂ oxide of the present application, the A element undergoes valence changes to provide charge compensation in a charge and discharge process, thereby improving the specific capacity of the layered oxide; Q is one or more of transition metal elements containing 3d or 4d orbital electrons except Fe and Ni, a d orbital and a 2p orbital of oxygen in the layered oxide structure are hybridized, and when oxygen is oxidized under a high voltage and loses electrons to form a hole, the hole can be stabilized by a hybrid orbital formed by the hybridization of the d orbital and the 2p orbital of oxygen in the structure, thereby inhibiting irreversible oxygen losses and structure collapse under the high voltage; and elements without d orbitals, such as Li and Mg cannot be effectively hybridized with the 2p orbital of oxygen in the structure, resulting in the existence of a 2p non-bonding orbital of oxygen, thus, even if Li or Mg is doped, the Li and Mg cannot prevent the loss of oxygen atoms under the high voltage, and accordingly, local structure collapse and metal losses cannot be relieved, resulting in problems such as low charge-discharge energy conversion efficiency and poor cycle stability.

The Q element is not enough to effectively inhibit the irreversible oxygen losses and the structural collapse of oxygen under the high voltage. It can be found through the present application that Al³⁺or B³⁺with high ionic potential and transition metal elements containing d orbital electrons can work together to greatly inhibit oxygen losses, because Al³⁺or B³⁺with high ionic potential has a strong interaction with oxygen, their bonding with oxygen have a high covalent bond composition, which can effectively inhibit oxygen losses.

However, Al³⁺or B³⁺with high ionic potential and the transition metal elements containing the d orbital electrons are ensured to be within the range of 1≤b/c≤100. If b/c<1, the local ionic potential of the layered oxide is too high, the d orbital of the transition metal is less hybridized with the 2p orbital of oxygen in the structure, a metal-oxygen octahedron is greatly distorted, a layered structure is locally unstable, mixed arrangement of metal ions and sodium ions is likely to happen, resulting in forming a local spinel/rock salt phase, and hindering diffusion and deintercalation of the sodium ions; and if 100<b/c, the content of Al³⁺or B³⁺with high ionic potential is too small, which is insufficient to synergistically inhibit oxygen losses together with the transition metal elements containing the d orbital electrons. Only when 1<b/c<100 is satisfied, the obtained layered oxide has a relatively stable layered structure, and the losses of oxygen and the metal are not likely to happen during sodium deintercalation under the high voltage.

Therefore, when 1≤b/c≤100, the Q element and the C element cooperate with each other to effectively inhibit the losses of oxygen and the metal during sodium deintercalation under the high voltage, thereby further improving structural stability of the NaₓMny_{Aa}Q_{b}C_{c}O₂ oxide, and improving the specific capacity and coulombic efficiency of the layered oxide.

In some embodiments, the above 0.7≤x≤1 may be optionally replaced with 0.8<x<1 or 0.9<x<1; optionally, 0.01≤b≤0.2 or 0.05≤b≤0.15; optionally, 0.01≤c <0.1 or 0.01<c<0.05 or 0.01<c<0.02; and optionally, 1<b/c<100 or 1<b/c≤50 or 1<b/c<10 or 4<b/c<50. Through further control over x, b, c and b/c, the synergistic effect among the elements is optimized, and the inhibition effect on the irreversible oxygen losses is further improved.

There are many types of transition metal elements with 3d electrons or 4d orbital electrons. In order to fully improve the stabilizing effect of the hybrid orbital formed by the 3d and 4d orbitals and the 2p orbital of oxygen on the local hole in oxygen, in some embodiments in the first aspect, the above Q is selected from one or more of the group consisting of Cu, Zn, Y and Ti. When the Q is selected from the above transition metal, the hybrid orbital formed by the d orbital of the Q and the 2p orbital of oxygen has a stronger stabilizing effect on the local hole in oxygen, and thus, the inhibition effect on the irreversible oxygen losses is better.

In the present invention, the A contains Fe and Ni, so as to utilize iron and nickel at the same time to provide stable charge compensation, and the presence of iron and nickel is also beneficial to maintain a more stable layered structure.

In some embodiments, the phase state of the above-mentioned layered oxide is an O3 phase, and the space group is . The O3-phase layered oxide has a higher Na content, and thus has a higher initial charge specific capacity.

In some embodiments, an interlayer distance d₀₀₃ of a (003) crystal face of the above-mentioned layered oxide is 0.53 nm to 0.55 nm, such that the structure of the layered oxide is more stable.

In some embodiments, the intensity of a (003) characteristic peak in an X-ray diffraction spectrum of the layered oxide before soaking is I0, the intensity of the (003) characteristic peak in the X-ray diffraction spectrum of the layered oxide after 24 h room-temperature soaking in water is I1, and I1/I0≤0.2. I1/I0 may represent water stability of a layered oxide positive electrode active material, and the smaller the I1/I0, the poorer the water stability of the layered oxide positive electrode active material, and the more sensitive to water. Studies have found that I1/I0≥0.2 indicates good water stability of the layered oxide, which results in a high energy density and good cycle performance of a sodium-ion battery containing the layered oxide. An X-ray powder diffractometer may be used to observe the intensity change of the (003) characteristic peak in the X-ray diffraction spectrum of the layered oxide positive electrode active material before and after soaking in water for 24 h.

The surface of the layered oxide has residual alkali, such that the layered oxide is alkaline. After doping with the above-mentioned A element, Q element and C element of the present application, the surface residual alkali is reduced, in any of manners of the first aspect, the pH value of a layered oxide aqueous solution with a mass concentration of 10% is between 11 and 13. When the pH value is low, sizing and coating are easy during positive electrode slurry preparation. For example, if the pH value is too high, gel formation and difficult coating are caused in the sizing process.

It needs to be explained that in the present application, the volume average particle size Dᵥ₅₀refers to a corresponding particle size when the cumulative volume distribution percentage of the layered oxide reaches 50%. In the present application, the volume average particle size Dᵥ₅₀ of the layered oxide may be measured by a laser diffraction particle size analysis method. For example, measurement is performed by a laser particle size analyzer (e.g., Malvern Master Size 3000) with reference to the standard GB/T 19077-2016. In some embodiments of the first aspect, the Dᵥ₅₀ of the layered oxide is 3µm~30µm, optionally, 5µm~15µm. Through control over Dᵥ₅₀, it is guaranteed that the gram capacity of the secondary battery using the layered oxide is fully exerted, and at the same time, the agglomeration of ions caused by a too small particle size is avoided, avoiding influences on a dispersion effect of the material.

In some embodiments, the specific surface area BET of the layered oxide is 0.1 m²/g~5 m²/g, optionally, 0.3 m²/g~3 m²/g, and further optionally, 0.3 m²/g~0.7 m²/g. When the specific surface area is smaller than the above range, the conductivity of the layered oxide is relatively reduced, and the rate performance of the secondary battery is affected; and when the specific surface area is larger than the above range, the contact area between the layered oxide and a non-aqueous electrolyte solution will be increased, and interfacial side reactions are more likely to be sent, which will affect the cycle performance and storage performance of the secondary battery. The specific surface area of the layered oxide is a well-known meaning in the art, and can be measured with instruments and methods known in the art. For example, according to GB/T 19587-2017, testing may be performed by a nitrogen adsorption specific surface area analysis method, and calculated by a BET (Brunauer Emmett Teller) method.

In some embodiments, the tap intensity of the layered oxide is 1 g/cm³~3 g/cm³, optionally, 1.5 g/cm³~2.5 The tap density may be measured by instruments and methods known in the art, for example, the tap density may be measured according to GB/T5162-2006. When the tap density is within the above range, material stack is more densely, which is conducive to improving the tap density of the electrode sheet and the volumetric energy density of a battery cell.

In some embodiments, the powder compaction intensity of the layered oxide under the pressure of 300MPa is 3.0 g/cm³~4.0 The higher the compaction density, the greater the weight of the layered oxide per unit volume, and thus, increasing the compaction density is beneficial to the improvement of the volumetric energy density of the battery cell. The compaction density may be measured according to GB/T 24533-2009.

When any one of the volume average particle size Dᵥ₅₀ of the layered oxide, the specific surface area BET, the tap density or the powder compaction density under the pressure of 300MPa is within the above range, the conduction distance of sodium ions in particles is short, and the surface side reaction is less, which are conducive to the material to have a better gram capacity, and as a result, the cycle performance of the battery using the material is excellent.

The layered oxide of the present application may be prepared by a conventional solid-phase method or co-precipitation method in the art.

Another embodiment of the present application provides a preparation method of a layered oxide. The preparation method includes: step S1, a Na source, a Mn source, an A source, a Q source and a C source were mixed to obtain a precursor powder, where the Na source, the Mn source, the A source, the Q source and the C source were mixed according to the molar ratio of Na:Mn:A:Q:C being (0.85-1.2):(0.2-0.6):(0.3-0.6): (0-0.2): (0-0.1), the mole number of Q and C was not 0, an A element in the A source was Fe and Ni, a Q element in the Q source was one or more of transition metal elements containing 3d or 4d orbital electrons except Fe and Ni, and a C element in the C source was one or two of Al and B; and step S2, the precursor powder was calcined in an oxidizing atmosphere and crushed to obtain the layered oxide. The preparation method is implemented by a solid-phase method, and the operation is simple and easy to implement. During calcination, part of the Na source was burnt, and therefore, there was a moderate excess of Na source during the batching, so as to ensure that the obtained layered oxide contained more sodium elements as many as possible on the basis that the transition metal elements and the C element in the above ratio were contained.

Using the above preparation method, the layered oxide with the general formula NaₓMn_{y}AₐQ_{b}C_{c}O₂ can be obtained, where 0.66<x≤1, 0.2≤y≤0.6, 0.3<a<0.6, 0< b<0.2, 0<c≥0.1 and 1≤b/c≤100. In the layered oxide with the general formula NaₓMn_{y}AₐQ_{b}C_{c}O₂, the A element undergone valence changes to provide charge compensation in a charge and discharge process, thereby improving the specific capacity of the layered oxide; Q was one or more of transition metal elements containing 3d or 4d orbital electrons except Fe and Ni, a d orbital of the Q element and a 2p orbital of oxygen in the oxide were hybridized to form a hybrid orbital, and a local hole in oxygen may be stabilized by the hybrid orbital, thereby inhibiting irreversible oxygen losses and structure collapse of oxygen under the high voltage; meanwhile, the C element in an ionic state had a high ionic potential and highly interacted with oxygen, and its bonding with oxygen had a high covalent bond component, which can effectively inhibit oxygen losses; and further, 1<b/c<100, and the Q element and the C element were matched so as to effectively inhibit oxygen and metal losses during sodium deintercalation under the high voltage, thereby further improving structural stability of the oxide NaₓMn_{y}AₐQ_{b}C_{c}O₂, and then improving the specific capacity and coulombic efficiency of the layered oxide.

In some embodiments, step S1 implemented mixing by a ball milling or mechanical stirring method. Ball milling and mechanical stirring both can realize sufficient mixing of various substances, and particularly, ball milling, under a certain ball milling condition, may realize more sufficient mixing. Optionally, ball milling was dry ball milling, and zirconium balls were used as grinding balls. The specific operating conditions of the above-mentioned ball milling and mechanical stirring, such as a diameter of the grinding balls and a rotating speed, may refer to conventional means, which will not be repeated here.

The Na source, the Mn source, the A source, the Q source, and the C source used in the above preparation method of the present application may be corresponding salts, oxides, hydroxides, etc. commonly used in the art. In some embodiments of the second aspect, the Na source is selected from one or more of the group consisting of Na₂CO₃, NaHCO₃, NaOH and Na₂O₂; optionally, the Mn source is selected from one or more of the group consisting of Mn₂O₃, Mn₃O₄, MnO and MnO₂; optionally, the A source is selected from one or more of the group consisting of A oxides and salts containing the A element, and the A element contains Fe and Ni; optionally, the Q source is one or more of the group consisting of Q oxides and salts containing the Q element, and optionally, the Q element is selected from one or more of the group consisting of Cu, Zn, Y and Ti; and optionally, the C source is one or more of the group consisting of C oxides and salts containing the C element. The above raw materials are extensive in source and low in cost.

In some embodiments, the above oxidizing atmosphere is selected from air, oxygen, mixed gas of air and oxygen, and mixed gas of oxygen and inert gas. The above oxidizing atmosphere is used to provide sufficient active oxygen in the calcination process to obtain the layered oxide with better crystallinity. The volume ratio of oxygen to air in the above mixed gas of oxygen and air may be 1:99 to 99:1, and the volume ratio of oxygen to inert gas in the above mixed gas of oxygen and inert gas may be 10:90 to 90:10, and the inert gas is argon, helium or nitrogen well known to those skilled in the art.

In some embodiments, the above calcination temperature is 700°C to 1000°C, and the heat preservation time of calcination is 10 h to 30 h; optionally, step S2 includes a first calcination stage and a second calcination stage sequentially performed, the calcination temperature in the first calcination stage is 400°C to 900°C, and the heat preservation time in the first calcination stage is 2 h to 20 h; and the calcination temperature in the second calcination stage is 700°C to 1000°C, and the heat preservation time in the second calcination stage is 10 h to 30 h. In the first calcination stage, the raw materials may be made to react preliminarily at a low temperature to form the layered oxide, elements in the layered oxide are diffused uniformly in advance, while the temperature in the second calcination stage is high, which can further improve the crystallinity of the layered oxide, and further promote the diffusion of different elements. Compared with the conditions of single calcination, a product obtained by two-stage calcination is more uniform in element distribution and better in crystallinity.

### [Positive electrode sheet]

The positive electrode sheet generally includes a positive electrode current collector and a positive electrode film layer arranged on at least one surface of the positive electrode current collector, and the positive electrode film layer includes a positive electrode active material, and the positive electrode active material includes any layered oxide of the present application or the layered oxide obtained by any preparation method in the second aspect.

As an example, the positive electrode current collector has two opposite surfaces in its own thickness direction, and the positive electrode film layer is arranged on either or both of the two opposite surfaces of the positive electrode current collector.

In some embodiments, the positive electrode current collector can be a metal foil or a composite current collector. For example, an aluminum foil can be used as the metal foil. The composite current collector may include a high molecular material substrate layer and a metal layer formed on at least one surface of the high molecular material substrate layer. The composite current collector may be formed by forming a metal material (aluminum, an aluminum alloy, nickel, a nickel alloy, titanium, a titanium alloy, silver, a silver alloy, etc.) on a high molecular material substrate (e.g., polypropylene (PP), polyethylene terephthalate (PET), polybutylene terephthalate (PBT), polystyrene (PS), and polyethylene (PE)).

In some embodiments, based on the total weight of the positive electrode film layer, the content of the layered oxide in the positive electrode film layer is 60 wt% or above, optionally, 80 wt% to 98 wt%. In addition, the positive electrode active material may be a positive electrode active material for batteries well known in the art. As an example, the positive electrode active material may include at least one of the following materials: sodium-containing phosphate, and sodium-containing Prussian white cyanide. However, the present application is not limited to these materials, and other conventional materials capable of being used as the positive electrode active material for the batteries may also be used. These positive electrode active materials may be used either alone with just one type or in combination with two or more types. Examples of the sodium-containing phosphate include but not limited to sodium vanadium phosphate (e.g., Na₃V₂(PO₄)₃), composite materials of sodium vanadium phosphate and carbon, Na₄Fe₃(PO₄)₂(P₂O₇), composite materials of Na₄Fe₃(PO₄)₂(P₂O₇) and carbon, Na₃V₂(PO₄)₂O₂F, and composite materials of Na₃V₂(PO₄)₂O₂F and carbon. Examples of the sodium-containing Prussian white cyanide may include but not limited to Na₂Mn[Fe(CN)₆], composite materials of Na₂Mn[Fe(CN)₆] and carbon, Na₂Fe[Fe(CN)₆], and composite materials of Na₂Fe[Fe(CN)₆] and carbon.

In some embodiments, the positive electrode film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode film layer further optionally comprises a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode sheet may be prepared by following manners: the components for preparing the positive electrode sheet, such as the positive electrode active material, the conductive agent, the binder and any other component were dispersed in a solvent (e.g., N-methyl pyrrolidone) to form a positive electrode slurry; and the positive electrode current collector was coated with the positive electrode slurry, and followed by oven drying, cold pressing and other procedures, the positive electrode sheet was obtained.

### [Negative electrode sheet]

The negative electrode sheet includes a negative electrode current collector and a negative electrode film layer arranged on at least one surface of the negative electrode current collector, where the negative electrode film layer includes a negative electrode active material.

As an example, the negative electrode current collector has two opposite surfaces in its own thickness direction, and the negative electrode film layer is arranged on either or both of the two opposite surfaces of the negative electrode current collector.

In some embodiments, the negative electrode current collector may be a metal foil or a composite current collector. For example, an aluminum foil may be used as the metal foil. The composite current collector may include a high molecular material substrate layer and a metal layer formed on at least one surface of a high molecular material substrate. The composite current collector may be formed by forming a metal material (aluminum, an aluminum alloy, nickel, a nickel alloy, titanium, a titanium alloy, silver, a silver alloy, etc.) on the high molecular material substrate (e.g., polypropylene (PP), polyethylene terephthalate (PET), polybutylene terephthalate (PBT), polystyrene (PS), and polyethylene (PE)).

In some embodiments, a negative electrode active material for batteries well known in the art may be used as the negative electrode active material. As an example, the negative electrode active material may include at least one of the following materials: soft carbon, hard carbon, a silicon-based material, a tin-based material, sodium titanate, etc. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials useful as negative electrode active materials for batteries can also be used. These negative electrode active materials may be used alone or in combination of two or more thereof.

In some embodiments, the negative electrode film layer further optionally includes a binder. As an example, the binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer further optionally comprises a conductive agent. As an example, the conductive agent may be selected from at least one of superconducting carbon, acetylene black, carbon black, Ketjen black, carbon dot, carbon nanotube, graphene, and carbon nanofiber.

In some embodiments, the negative electrode film layer may further optionally include other auxiliaries, such as a thickener (e. g., sodium carboxymethyl cellulose (CMC-Na)).

In some embodiments, the negative electrode sheet may be prepared by following manners: the components for preparing the negative electrode sheet, such as the negative electrode active material, the conductive agent, the binder and any other component were dispersed in a solvent (e.g., deionized water) to form a negative electrode slurry; and the negative electrode current collector was coated with the negative electrode slurry, and followed by oven drying, cold pressing and other procedures, the negative electrode sheet was obtained.

### [Electrolyte]

The electrolyte plays the role of conducting ions between the positive electrode sheet and the negative electrode sheet. The type of the electrolyte is not particularly limited in the present application, and can be selected according to requirements. For example, the electrolyte may be in a liquid state, a gel state, or an all-solid state.

In some embodiments, the electrolyte is in a liquid state, and includes an electrolyte salt and a solvent.

In some embodiments, the electrolyte salt may be selected from at least one of NaPF₆, NaClO₄, NaBF₄, NaNO₃, NaPOFA, NaSCN, NaCN, NaAsF₆, NaCF₃CO₂, NaSbF₆, NaC₆HsCO₂, Na(CH₃)C₆H₄SO₃, NaHSO₄, and NaB(C₆Hs)₄.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone and diethyl sulfone.

In some embodiments, the electrolyte solution further optionally comprises an additive. For example, the additive may include a negative electrode film-forming additive and a positive electrode film-forming additive, and may also include additives that can improve certain battery properties, such as additives that improve battery overcharge performance, and additives that improve battery high or low temperature performance.

### [Separator]

In some embodiments, the secondary battery also includes a separator. The type of the separator is not particularly limited in the present application, and any well-known separator with a porous structure having good chemical stability and mechanical stability may be selected.

In some embodiments, the material of the separator may be selected from at least one of glass fiber, non-woven cloth, polyethylene, polypropylene, and polyvinylidene fluoride. The separator may be a single-layer film or a multi-layer composite film, and is not particularly limited. When the separator is a multi-layer composite film, the material of each layer may be the same or different, which is not particularly limited.

In some embodiments, the positive electrode sheet, the negative electrode sheet, and the separator may be made into an electrode assembly by a winding process or a lamination process.

In some embodiments, the secondary battery may include an outer package. The outer package may be used to encapsulate the above electrode assembly and the above electrolyte.

In some embodiments, the outer package of the secondary battery may be a hard shell, such as a hard plastic shell, an aluminum shell and a steel shell. The outer package of the secondary battery may also be a soft pack, such as a bag-type soft pack. The material of the soft pack may be plastic, and as plastic, polypropylene, polybutylene terephthalate, and polybutylene succinate may be enumerated.

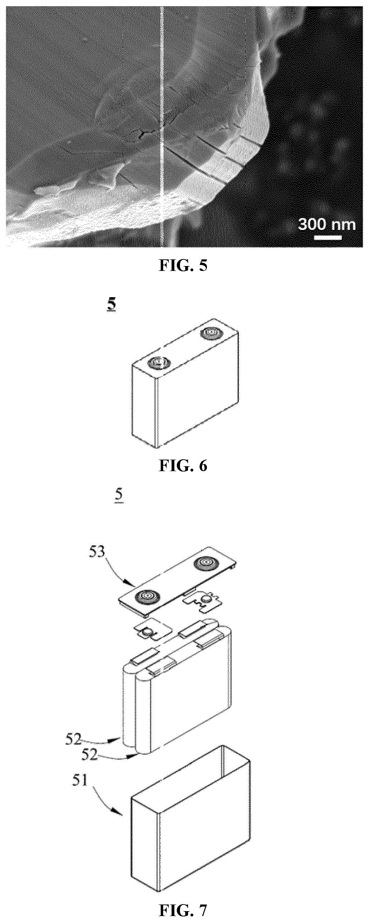

The present application has no particular limitation on the shape of the secondary battery, which may be cylindrical, square or any other shape. For example, Fig. 6 is an example of secondary battery 5 having a square structure.

In some embodiments, referring to Fig. 7, the outer package can include a case 51 and a cover plate 53. Here, the case 51 can include a bottom plate and a side plate connected to the bottom plate, with the bottom plate and the side plate enclosing to form an accommodating cavity. The case 51 has an opening communicating with the accommodating cavity, and the cover plate 53 may cover the opening to close the accommodating cavity. A positive electrode sheet, a negative electrode sheet, and a separator may form an electrode assembly 52 by a winding process or a lamination process. The electrode assembly 52 is encapsulated within the accommodating cavity. The electrolyte solution impregnates the electrode assembly 52. The secondary battery 5 may include one or more electrode assemblies 52, which can be selected by those skilled in the art according to specific actual requirements.

In some embodiments, the secondary batteries may be assembled into a battery module, and the number of the secondary batteries included in the battery module may be one or more, and the specific number may be selected by those skilled in the art according to the application and capacity of the battery module.

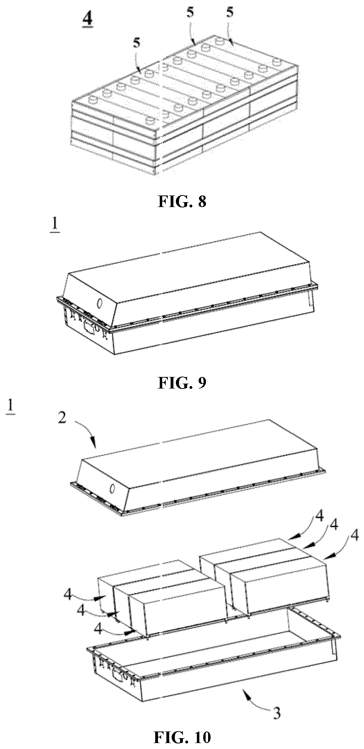

Fig. 8 is an example of a battery module 4. Referring to Fig. 8, in the battery module 4, a plurality of secondary batteries 5 may be sequentially arranged in a length direction of the battery module 4. Of course, any other arrangement is also possible. The plurality of secondary batteries 5 may further be fixed by fasteners.

Optionally, the battery module 4 may further include a shell with an accommodating space, and the plurality of secondary batteries 5 are accommodated in the accommodating cavity.

In some embodiments, the battery module may be further assembled into a battery pack, there may be one or more battery modules contained in the battery pack, and the specific number may be selected by those skilled in the art according to the use and capacity of the battery pack.

Fig. 9 and Fig. 10 are an example of a battery pack 1. Referring to Fig. 9 and Fig. 10, the battery pack 1 may comprise a battery box and a plurality of battery modules 4 arranged in the battery box. The battery box includes an upper box 2 and a lower box 3, where the upper box 2 can cover the lower box 3 and forms an enclosed space for accommodating the battery module 4. The plurality of battery modules 4 may be arranged in the battery box in any manner.

In addition, the present application further provides an electrical apparatus, and the electrical apparatus includes at least one of the secondary battery, the battery module, or the battery pack provided in the present application. The secondary battery, battery module, or battery pack can be used as a power source for the electrical apparatus, and can also be used as an energy storage unit for the electrical apparatus. The electrical apparatus may include but not limited to a mobile device (e.g., a mobile phone and a laptop), an electric vehicle (e.g., an all-electric vehicle, a hybrid electric vehicle, a plug-in hybrid electric vehicle, an electric bicycle, an electric scooter, an electric golf cart and an electric truck), an electric train, a ship, a satellite, an energy storage system, etc.

For the electrical apparatus, the secondary battery, the battery module, or the battery pack may be selected according to the requirements during use.

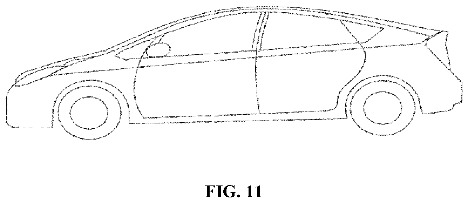

Fig. 11 is an example of an electrical apparatus. The electrical apparatus is an all-electric vehicle, a hybrid electric vehicle or a plug-in hybrid electric vehicle, etc. In order to meet the requirements of the electrical apparatus for high power and high energy density of secondary batteries, a battery pack or a battery module may be used.

### [Examples]

Examples of the present application will be described hereinafter. The examples described below are exemplary, are only used to explain the present application, and are not to be construed as limiting the present application. Examples in which specific techniques or conditions are not specified are performed according to the techniques or conditions described in the literatures in the art or the product specifications. Where manufacturers are not specified, the reagents or instruments used are conventional products and are commercially available.

### Example 1

### Preparation of Aluminum-doped Layered Oxide

Na₂CO₃, Mn₂O₃, Fe₂O₃, NiO, Al₂O₃ and CuO were mixed according to the molar ratio of Na:Mn:Fe:Ni:Al:Cu being 1:0.49:0.2:0.2:0.01:0.1 to weigh a sample with a total weight of 30 g. The obtained sample was pre-ground in an agate mortar and then added to a planetary ball mill to be subject to ball milling for 1 h, where the ball-to-material ratio was 8:1, grinding balls were zirconia grinding balls, the rotational speed of ball milling was 500 rpm, and then a precursor mixture was obtained. The obtained precursor mixture was uniformly placed in an open crucible, then heated from a room temperature to 950°C in a muffle furnace at a heating rate of 5°C/min, and kept at a constant temperature of 950°C for 15 h, and after natural cooling, the layered oxide Na_{0.81}Mn_{0.49}Fe_{0.2}Ni_{0.2}Al_{0.01}Cu_{0.1}O₂ was obtained.

### Example 2

**The difference from Example 1:** Na₂CO₃, Mn₂O₃, Fe₂O₃, NiO, B₂O₃ and CuO were mixed according to the molar ratio of Na:Mn:Fe:Ni:B:Cu being 1:0.49:0.2:0.2:0.01:0.1 to weigh a sample with a total weight of 30 g. All the other operations were the same as in Example 1.

### Example 3

**The difference from Example 1:** Na₂CO₃, Mn₂O₃, Fe₂O₃, NiO, Al₂O₃ and Y₂O₃ were mixed according to the molar ratio of Na:Mn:Fe:Ni:Al:Y being 1:0.49:0.2:0.2:0.01:0.1 to weigh a sample with a total weight of 30 g. All the other operations were the same as in Example 1.

### Example 4

**The difference from Example 1:** Na₂CO₃, Mn₂O₃, Fe₂O₃, NiO, B₂O₃ and ZnO were mixed according to the molar ratio of Na:Mn:Fe:Ni:B:Zn being 1:0.48:0.2:0.2:0.02:0.1 to weigh a sample with a total weight of 30 g. All the other operations were the same as in Example 1.

### Example 5

**The difference from Example 1:** Na₂CO₃, Mn₂O₃, Fe₂O₃, NiO, B₂O₃ and TiO₂ were mixed according to the molar ratio of Na:Mn:Fe:Ni:B:Ti being 1:0.48:0.2:0.2:0.02:0.1 to weigh a sample with a total weight of 30 g. All the other operations were the same as in Example 1.

### Example 6

**The difference from Example 1:** Na₂CO₃, Mn₂O₃, Fe₂O₃, NiO, B₂O₃ and Y₂O₃ were mixed according to the molar ratio of Na:Mn:Fe:Ni:B:Y being 1:0.49:0.2:0.2:0.01:0.1 to weigh a sample with a total weight of 30 g. All the other operations were the same as in Example 1.

### Example 7

**The difference from Example 1:** Na₂CO₃, Mn₂O₃, Fe₂O₃, NiO, Al₂O₃ and TiO₂ were mixed according to the molar ratio of Na:Mn:Fe:Ni:Al: Ti being 1:0.398:0.2:0.2:0.002:0.2 to weigh a sample with a total weight of 30 g. All the other operations were the same as in Example 1.

### Example 8

**The difference from Example 1:** Na₂CO₃, Mn₂O₃, Fe₂O₃, NiO, B₂O₃ and CuO were mixed according to the molar ratio of Na:Mn:Fe:Ni:B:Cu being 1:0.49:0.2:0.1:0.01:0.2 to weigh a sample with a total weight of 30 g. All the other operations were the same as in Example 1.

### Example 9

**The difference from Example 1:** Na₂CO₃, Mn₂O₃, Fe₂O₃, NiO, B₂O₃ and CuO were mixed according to the molar ratio of Na:Mn:Fe:Ni:B:Cu being 1:0.29:0.3:0.3:0.01:0.1 to weigh a sample with a total weight of 30 g. All the other operations were the same as in Example 1.

### Example 10

**The difference from Example 1:** Na₂CO₃, Mn₂O₃, Fe₂O₃, NiO, B₂O₃ and CuO were mixed according to the molar ratio of Na:Mn:Fe:Ni:B:Cu being 1:0.4:0.2:0.2:0.1:0.1 to weigh a sample with a total weight of 30 g. All the other operations were the same as in Example 1.

### Example 11

**The difference from Example 1:** Na₂CO₃, Mn₂O₃, Fe₂O₃, NiO, A₂O₃and CuO were mixed according to the molar ratio of Na:Mn:Fe:Ni:Al:Cu being 1:0.49:0.2:0.2:0.055:0.055 to weigh a sample with a total weight of 30 g. All the other operations were the same as in Example 1.

### Example 12

**The difference from Example 1:** Na₂CO₃, Mn₂O₃, Fe₂O₃, NiO, Al₂O₃ and CuO were mixed according to the molar ratio of Na:Mn:Fe:Ni:Al:Cu being 1:0.49:0.2:0.2:0.02:0.09 to weigh a sample with a total weight of 30 g. All the other operations were the same as in Example 1.

### Example 13

**The difference from Example 1:** Na₂CO₃, Mn₂O₃, Fe₂O₃, NiO, Al₂O₃ and CuO were mixed according to the molar ratio of Na:Mn:Fe:Ni:Al:Cu being 1:0.49:0.2:0.2:0.005:0.105 to weigh a sample with a total weight of 30 g. All the other operations were the same as in Example 1.

### Example 14

**The difference from Example 1:** Na₂CO₃, Mn₂O₃, Fe₂O₃, NiO, Al₂O₃ and CuO were mixed according to the molar ratio of Na:Mn:Fe:Ni:Al:Cu being 1:0.49:0.2:0.2:0.002:0.108 to weigh a sample with a total weight of 30 g. All the other operations were the same as in Example 1.

### Example 15

**The difference from Example 1:** Na₂CO₃, Mn₂O₃, Fe₂O₃, NiO, Al₂O₃ and CuO were mixed according to the molar ratio of Na:Mn:Fe:Ni:Al:Cu being 1:0.49:0.2:0.2:0.0012:0.1088 to weigh a sample with a total weight of 30 g. All the other operations were the same as in Example 1.

### Example 16

**The difference from Example 1:** Na₂CO₃, Mn₂O₃, Fe₂O₃, NiO, Al₂O₃ and CuO were mixed according to the molar ratio of Na:Mn:Fe:Ni:Al:Cu being 0.85:0.49:0.2:0.2:0.01:0.1 to weigh a sample with a total weight of 30 g. All the other operations were the same as in Example 1.

### Example 17

**The difference from Example 1:** Na₂CO₃, Mn₂O₃, Fe₂O₃, NiO, Al₂O₃ and CuO were mixed according to the molar ratio of Na:Mn:Fe:Ni:Al:Cu being 1.2:0.49:0.2:0.2:0.01:0.1 to weigh a sample with a total weight of 30 g. All the other operations were the same as in Example 1.

### Example 18

**The difference from Example 1:** Na₂CO₃, Mn₂O₃, Fe₂O₃, NiO, Al₂O₃ and CuO were mixed according to the molar ratio of Na:Mn:Fe:Ni:Al:Cu being 1:0.2:0.25:0.25:0.1:0.2 to weigh a sample with a total weight of 30 g. All the other operations were the same as in Example 1. Layered oxide

### Example 19

The only difference from Example 1 is that the calcination conditions of the sodium source and the precursor mixture were different, as follows:
the adopted sodium source was NaOH, the obtained precursor and NaOH mixture was uniformly placed in an open crucible, then heated from a room temperature to 700°C in a muffle furnace at a heating rate of 5°C/min, and kept at a constant temperature of 700°C for 30 h, and after natural cooling, the layered oxide Na_{0.81}Mn_{0.49}Fe_{0.2}Ni_{0.2}Al_{0.01}Cu_{0.1}O₂ was obtained.

### Example 20

The only difference from Example 1 is that the calcination conditions of the precursor mixture were different, as follows:
the obtained precursor mixture was uniformly placed in an open crucible, then heated from a room temperature to 1000°C in a muffle furnace at a heating rate of 5°C/min, and kept at a constant temperature of 1000°C for 10 h, and after natural cooling, the layered oxide Na_{0.81}Mn_{0.49}Fe_{0.2}Ni_{0.2}Al_{0.01}Cu_{0.1}O₂ was obtained.

### Example 21

The only difference from Example 1 is that the calcination conditions of the precursor mixture were different, as follows:
the obtained precursor mixture was uniformly placed in an open crucible, then heated from a room temperature to 1100°C in a muffle furnace at a heating rate of 5°C/min, and kept at a constant temperature of 1100°C for 8 h, and after natural cooling, the layered oxide Na_{0.72}Mn_{0.49}Fe_{0.2}Ni_{0.2}Al_{0.01}Cu_{0.1}O₂ was obtained.

### Example 22

The only difference from Example 1 is that the calcination conditions of the sodium source and the precursor mixture were different, as follows:
the adopted sodium source was NaOH, the obtained precursor and NaOH mixture was uniformly placed in an open crucible, then heated from a room temperature to 400°C in a muffle furnace at a heating rate of 5°C/min, and kept at a constant temperature of 400°C for 20 h; and then the obtained precursor and NaOH mixture was continuously heated from 400°C to 700°C at a heating rate of 5°C/min, and kept at a constant temperature of 700°C for 30 h, and after natural cooling, the layered oxide Na_{0.86}Mn_{0.49}Fe_{0.2}Ni_{0.2}Al_{0.01}Cu_{0.1}O₂ was obtained.

### Example 23

The only difference from Example 1 is that the calcination conditions of the precursor mixture were different, as follows:
the obtained precursor mixture was uniformly placed in an open crucible, then heated from a room temperature to 400°C in a muffle furnace at a heating rate of 5°C/min, and kept at a constant temperature of 400°C for 20 h; and then the obtained precursor mixture was continuously heated from 400°C to 1000°C at a heating rate of 5°C/min, and kept at a constant temperature of 1000°C for 10 h, and after natural cooling, the layered oxide Na_{0.78}Mn_{0.49}Fe_{0.2}Ni_{0.2}Al_{0.01}Cu_{0.1}O₂ was obtained.

### Example 24

The only difference from Example 1 is that the calcination conditions of the precursor mixture were different, as follows:
the obtained precursor mixture was uniformly placed in an open crucible, then heated from a room temperature to 900°C in a muffle furnace at a heating rate of 5°C/min, and kept at a constant temperature of 900°C for 2 h; and then the obtained precursor mixture was continuously heated from 900°C to 1000°C at a heating rate of 5°C/min, and kept at a constant temperature of 1000°C for 10 h, and after natural cooling, the layered oxide Na_{0.79}Mn_{0.49}Fe_{0.2}Ni_{0.2}Al_{0.01}Cu_{0.1}O₂ was obtained.

### Comparative Example 1

**The difference from Example 1:** Na₂CO₃, Mn₂O₃, Fe₂O₃, NiO and CuO were mixed according to the molar ratio of Na:Mn:Fe:Ni:Cu being 1:0.5:0.2:0.2:0.1 to weigh a sample with a total weight of 30 g. All the other operations were the same as in Example 1.

### Comparative Example 2

**The difference from Example 1:** Na₂CO₃, Mn₂O₃, Fe₂O₃, NiO, Al₂O₃ and CuO were mixed according to the molar ratio of Na:Mn:Fe:Ni:Al:Cu being 1:0.4991:0.2:0.2:0.0009:0.1 to weigh a sample with a total weight of 30 g. All the other operations were the same as in Example 1.

### Comparative Example 3

**The difference from Example 1:** Na₂CO₃, Mn₂O₃, Fe₂O₃, NiO, B₂O₃ and CuO were mixed according to the molar ratio of Na:Mn:Fe:Ni:B:Cu being 1:0.4981:0.3:0.2:0.01:0.009 to weigh a sample with a total weight of 30 g. All the other operations were the same as in Example 1.

### Comparative Example 4

**The difference from Example 1:** Na₂CO₃, Mn₂O₃, Fe₂O₃, NiO, Al₂O₃ and CuO were mixed according to the molar ratio of Na:Mn:Fe:Ni:Al:Cu being 1:0.69:0.1:0.1:0.01:0.1 to weigh a sample with a total weight of 30 g. All the other operations were the same as in Example 1.

### Comparative Example 5

**The difference from Example 1:** Na₂CO₃, Mn₂O₃, Fe₂O₃, NiO, Al₂O₃ and CuO were mixed according to the molar ratio of Na:Mn:Fe:Ni:Al:Cu being 1:0.34:0.2:0.2:0.01:0.25 to weigh a sample with a total weight of 30 g. All the other operations were the same as in Example 1.

### Comparative Example 6

**The difference from Example 1:** Na₂CO₃, Mn₂O₃, Fe₂O₃, NiO, Al₂O₃ and CuO were mixed according to the molar ratio of Na:Mn:Fe:Ni:Al:Cu being 1:0.36:0.2:0.2:0.12:0.12 to weigh a sample with a total weight of 30 g. All the other operations were the same as in Example 1.

### Comparative Example 7

**The difference from Example 1:** Na₂CO₃, Mn₂O₃, Fe₂O₃, NiO, B₂O₃ and Li₂CO₃ were mixed according to the molar ratio of Na:Mn:Fe:Ni:B:Li being 1:0.49:0.2:0.2:0.01:0.1 to weigh a sample with a total weight of 30 g. All the other operations were the same as in Example 1.

### Comparative Example 8

**The difference from Example 1:** Na₂CO₃, Mn₂O₃, Fe₂O₃, NiO, B₂O₃ and MgO were mixed according to the molar ratio of Na:Mn:Fe:Ni:B:Mg being 1:0.49:0.2:0.2:0.01:0.1 to weigh a sample with a total weight of 30 g. All the other operations were the same as in Example 1.

### Tests

### (1) Interlayer distance d₀₀₃and space group test of (003) crystal face of layered oxide

In a drying room or glove box, a sample-to-be-tested was ground in an agate mortar to pass through a 350-mesh sieve. An appropriate amount of the sieved sample was taken and put into a middle of a sample holder groove, so that the loose sample powder was slightly higher than a plane of a sample holder; and a glass slide was taken to lightly press a surface of the sample, so that the surface of the sample was flattened to be consistent with a plane of the holder, and the excess powder was scraped off. After sample preparation, a Brucker D8A_A25 X-ray powder diffractometer from Brucker AXS Company in Germany was used to test with a CuKα ray as a radiation source, the ray wavelength λ=1.5406Å, the scanning 2θ angle range being 5° to 60°, and the scanning rate being 4° /min, after the test was completed, through an angle corresponding to the 003 crystal face, according to the Bragg equation 2d·sinθ = λ, and each unit cell of the 003 crystal face containing three transition metal layers, the interlayer distance d₀₀₃ of the (003) crystal face can be obtained, and by comparing XRD diffraction peaks of the sample with a standard card of XRD analysis software, it can be confirmed that the space group of the sample belongs to the O3 type layered oxide.

### (2) Element compositiontest byinductively coupled plasma emission spectrometry

The instrument standard refers to EPA6010D-2014 "Inductively Coupled Plasma Atomic Emission Spectrometry". The sample was chemically processed and digested into a solution, atomized into a plasma to excite characteristic spectral lines of elements, and the element content was qualitatively and quantitatively analyzed according to the wavelength and intensity of the spectral lines (in direct proportion to the concentration).

### (3) Dᵥ₅₀test

Equipment model : Melvin 2000 (MasterSizer 2000) laser particle sizer, a reference standard process: GB/T19077-2016/ISO 13320:2009, a specific test process: taking an appropriate amount of the sample-to-be tested (the sample concentration should guarantee a shading degree of 8% to 12% ), adding 20 ml of deionized water, at the same time, performing ultrasonic treatment for 5 min (53 KHz/120 W) to ensure that the sample was completely dispersed, and then testing the sample according to the standard GB/T19077-2016/ISO 13320:2009.

### (4) Powder compaction density test at 300MPa

An instrument used was a Yuanneng Technology PRCD1100 compactiondensity meter. Quantitative powder was placed in a special mold for compaction, and the mold was placed on the compaction density meter, and the pressure intensity was set to 300 MPa. A thickness of the powder under this pressure intensity can be read on the device, and the compaction density was calculated according to density=mass/volume. The test may be performed with reference to the standard GB/T 24533-2009.

### (5) First-cycle coulombic efficiency and cyclic 50-cycle capacity retention rate test of a layered oxide button battery

At 25°C, after the layered oxide was prepared into the button battery, the button battery was charged to 4.3 V at a constant current density of 10 mA/g to obtain the discharge capacity C0 of the button battery, and then discharged at a constant current density of 10 mA/g to 1.5V to obtain the discharge capacity C1 of the button battery. First-cycle coulombic efficiency of the layered oxide = discharge capacity C1 of button battery / charge capacity C0 of button battery. After the first cycle of charge and discharge, according to the discharge capacity C1, the current density was increased to 1C for charge and discharge cycles, and the discharge capacity C2 was obtained; and the discharge capacity C3 was obtained after 50 cycles, and the cyclic capacity retention rate of the 50 cycles = C3/ C2.

The button battery was prepared according to the steps shown below.

Positive electrode sheet preparation: the layered oxide, the conductive agent carbon black (Super P) and the binder polyvinylidene fluoride (PVDF) were mixed in an appropriate amount of solvent NMP to be sufficiently stirred in the mass ratio of 80:15:5 to form a uniform positive electrode slurry; and a surface of a positive electrode current collector aluminum foil was evenly coated with the positive electrode slurry, and after drying and cold pressing, a wafer with the diameter of 14 mm was obtained through punching, namely the positive electrode sheet.

A negative electrode sheet adopts a metal sodium sheet.

Electrolyte preparation: ethylene carbonate (EC) and diethyl carbonate (DEC) were mixed in equal volumes to obtain an organic solvent, and then NaClO₄was dissolved in the above organic solvent to prepare an electrolyte solution with the concentration of 1mol/L.

A separator adopts a porous polyethylene (PE) film.

button battery preparation: the positive electrode sheet, the separator and the negative electrode sheet were stacked in sequence, so that the separator was positioned between the positive electrode sheet and the negative electrode sheet to play an isolation role, and then the above prepared electrolyte solution was added to finish preparation of the button battery.

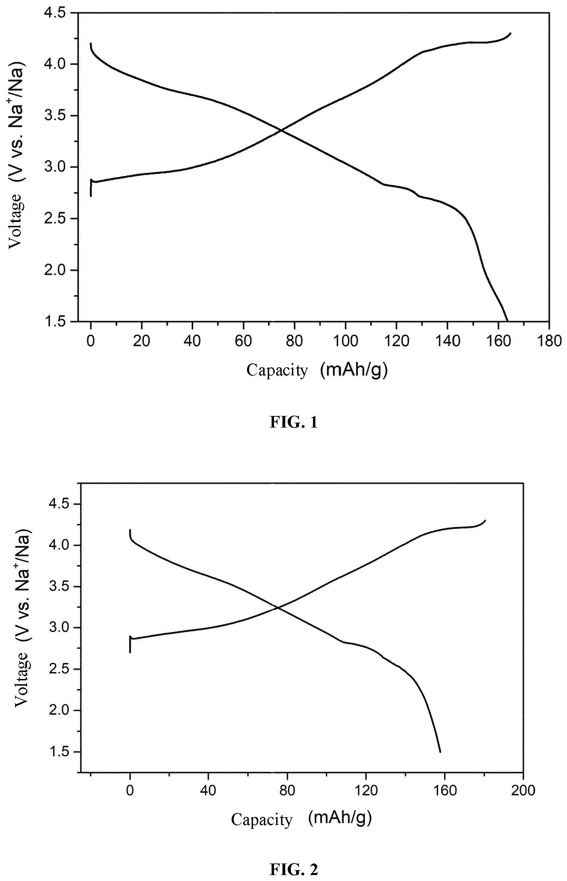

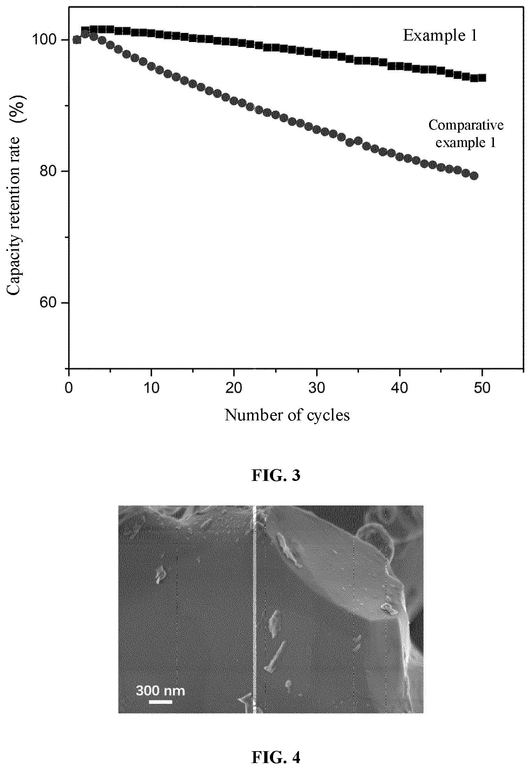

The discharge capacity C1 of the button battery and the charge capacity C0 of the button battery obtained through the test in Example 1 and Comparative example 1 are sequentially recorded in Fig. 1 and Fig. 2, and the cyclic 50-cycle capacity retention rates of the button battery obtained through the test in Example 1 and Comparative example 1 are recorded in Fig. 3. In addition, SEM images of the SEM-tested positive electrode materials for the layered oxide containing batteries disassembled after 50 cycles in Example 1 and Comparative Example 1 are sequentially shown in Fig. 4 and Fig. 5.

### (6) Soak test of layered oxide

5 g of layered oxide was taken to be put in a beaker, 15 mL of deionized water was added to be stirred at a rotational speed of 500 rpm for 1 min, filtering was performed after standing for 24 h, and vacuum dry was performed at 60°C for 6 h to obtain a soaked layered oxide positive electrode active material.

The X-ray powder diffractometer in the above test (1) was used to detect the intensity change of the (003) characteristic peak in the X-ray diffraction spectrum of the layered oxide positive electrode active material before and after soaking in water for 24 h. I1 represents the intensity of the (003) characteristic peak in the X-ray diffraction spectrum of the layered oxide positive electrode active material soaked in water for 24 h, and I0 represents the intensity of the

(003) characteristic peak in the X-ray diffraction spectrum of the layered oxide positive electrode active material before soaking. I1/I0 may represent water stability of the layered oxide positive electrode active material, and the smaller the I1/I0, the poorer the water stability of the layered oxide positive electrode active material, and the more sensitive to water.

### (7) pH test of layered oxide

2 g of layered oxide was taken and placed in a beaker, 18 mL of deionized water was added to be stirred at a rotational speed of 500 rpm for 1 min, and after standing for 30 min, the pH of supernatant was tested by a general-purpose pH meter according to the standard GB/T 9724-2007.

### (8) Specific surface area

According to GB/T 19587-2017, testing was performed on a Quadrasorb EVO specific surface area and hole diameter analyzer according to a nitrogen adsorption specific surface area analysis method, and the specific surface area was calculated by BET (Brunauer Emmett Teller) method.

### (9) Tap density

Measurement was performed according to GB/T5162-2006.

Test results are recorded in Table 1 and Table 2.

**Table 1**

| Serial Number | Layered oxide | Dᵥ₅₀( µm) | Tap density (g/cm³) | pH | Specific surface area (m²/g) | Tap density (g/cm³) |
|---|---|---|---|---|---|---|
| Example 1 | Na_{0.81}Mn_{0.49}Fe_{0.2}Ni_{0.2}Al_{0.01}Cu_{0. 1}O₂ | 8 | 3.46 | 12.53 | 0.4 | 2.1 |
| Example 2 | Na_{0.82}Mn_{0.49}Fe_{0.2}Ni_{0.2}B_{0.01}Cu_{0.1}O₂ | 9 | 3.53 | 12.31 | 0.5 | 2.1 |
| Example 3 | Na_{0.79}Mn_{0.49}Fe_{0.2}Ni_{0.2}Al_{0.01}Y_{0.1}O₂ | 11 | 3.44 | 12.41 | 0.5 | 2.0 |
| Example 4 | Na_{0.80}Mn_{0.48}Fe_{0.2}Ni_{0.2}B_{0.02}Zn_{0.1} O₂ | 9 | 3.56 | 12.32 | 0.5 | 1.9 |
| Example 5 | Na_{0.81}Mn_{0.48}Fe_{0.2}Ni_{0.2}B_{0.02}Ti_{0.1} O₂ | 12 | 3.54 | 12.55 | 0.5 | 1.9 |
| Example 6 | Na_{0.83}Mn_{0.49}Fe_{0.2}Ni_{0.2}B_{0.01}Y_{0.1} O₂ | 11 | 3.45 | 12.52 | 0.6 | 2.0 |
| Example 7 | Na_{0.82}Mn_{0.398}Fe_{0.2}Ni_{0.2}Al_{0.002}Ti _{0.2}O₂ | 9 | 3.42 | 12.77 | 0.6 | 2.1 |
| Example 8 | Na_{0.80}Mn_{0.49}Fe_{0.2}Ni_{0.1}B_{0.01}Cu_{0.2} O₂ | 9 | 3.43 | 12.66 | 0.5 | 2.1 |
| Example 9 | Na_{0.08}Mn_{0.29}Fe_{0.3}Ni_{0.3}B_{0.01}Cu_{0.1} O₂ | 9 | 3.39 | 12.86 | 0.5 | 2.2 |
| Example 10 | Na_{0.77}Mn_{0.4}Fe_{0.2}Ni_{0.2}B_{0.1}Cu_{0.1} O₂ | 10 | 3.53 | 12.67 | 0.5 | 2.3 |
| Example 11 | Na_{0.78}Mn_{0.49}Fe_{0.2}Ni_{0.2}Al_{0.055}Cu _{0.055}O₂ | 10 | 3.46 | 12.77 | 0.4 | 2.3 |
| Example 12 | Na_{0.79}Mn_{0.49}Fe_{0.2}Ni_{0.2}Al_{0.02}Cu_{0. 09}O₂ | 11 | 3.51 | 12.86 | 0.5 | 2.3 |
| Example 13 | Na_{0.77}Mn_{0.49}Fe_{0.2}Ni_{0.2}Al_{0.005}Cu _{0.105}O₂ | 10 | 3.37 | 12.68 | 0.6 | 2.1 |
| Example 14 | Na_{0.81}Mn_{0.49}Fe_{0.2}Ni_{0.2}Al_{0.002}Cu _{0.108}O₂ | 9 | 3.39 | 12.87 | 0.6 | 2.0 |
| Example 15 | Na_{0.78}Mn_{0.49}Fe_{0.2}Ni_{0.2}Al_{0.0012}C u_{0.1088}O₂ | 11 | 3.42 | 12.64 | 0.6 | 2.0 |
| Example 16 | Na_{0.67}Mn_{0.6}Fe_{0.2}Ni_{0.2}Al_{0.01}Cu_{0.2}O₂ | 9 | 3.43 | 12.55 | 0.6 | 2.1 |
| Example 17 | Na_{1.00}Mn_{0.49}Fe_{0.2}Ni_{0.2}Al_{0.01}Cu_{0. 1}O₂ | 13 | 3.52 | 12.88 | 0.5 | 2.0 |
| Example 18 | Na_{0.79}Mn_{0.2}Fe_{0.25}Ni_{0.25}Al_{0.1}Cu_{0. 2}O₂ | 9 | 3.42 | 12.65 | 0.6 | 2.1 |
| Example 19 | Na_{0.81}Mn_{0.49}Fe_{0.2}Ni_{0.2}Al_{0.01}Cu_{0. 1}O₂ | 8 | 3.42 | 12.89 | 0.6 | 2.2 |
| Example 20 | Na_{0.81}Mn_{0.49}Fe_{0.2}Ni_{0.2}Al_{0.01}Cu_{0. 1}O₂ | 12 | 3.43 | 12.91 | 0.6 | 2.3 |
| Example 21 | Na_{0.72}Mn_{0.49}Fe_{0.2}Ni_{0.2}Al_{0.01}Cu_{0. 1}O₂ | 30 | 3.42 | 12.68 | 0.3 | 1.8 |
| Example 22 | Na_{0.86}Mn_{0.49}Fe_{0.2}Ni_{0.2}Al_{0.01}Cu_{0. 1}O₂ | 6 | 3.46 | 12.69 | 0.7 | 2.1 |
| Example 23 | Na_{0.78}Mn_{0.49}Fe_{0.2}Ni_{0.2}Al_{0.01}Cu_{0.1}O₂ | 11 | 3.44 | 12.78 | 0.5 | 2.1 |
| Example 24 | Na_{0.79}Mn_{0.49}Fe_{0.2}Ni_{0.2}Al_{0.01}Cu_{0. 1}O₂ | 13 | 3.43 | 12.68 | 0.5 | 2.2 |
| Comparative Example 1 | Na_{0.79}Mn_{0.5}Fe_{0.2}Ni_{0.2}Cu_{0.1}O₂ | 9 | 3.45 | 12.55 | 0.6 | 2.1 |
| Comparative Example 2 | Na_{0.78}Mn_{0.4991}Fe_{0.2}Ni_{0.2}Al_{0.0009} Cu_{0.1}O₂ | 8 | 3.44 | 12.65 | 0.5 | 2.1 |
| Comparative Example 3 | Na_{0.80}Mn_{0.4981}Fe_{0.3}Ni_{0.2}B_{0.01}Cu _{0.009}O₂ | 9 | 3.38 | 12.58 | 0.5 | 2.2 |
| Comparative Example 4 | Na_{0.81}Mn_{0.69}Fe_{0.1}Ni_{0.1}Al_{0.01}Cu_{0. 1}O₂ | 10 | 3.42 | 12.68 | 0.5 | 2.3 |
| Comparative Example 5 | Na_{0.80}Mn_{0.34}Fe_{0.2}Ni_{0.2}Al_{0.01}Cu_{0. 25}O₂ | 9 | 3.44 | 12.78 | 0.5 | 2.1 |
| Comparative Example 6 | Na_{0.79}Mn_{0.36}Fe_{0.2}Ni_{0.2}Al_{0.12}Cu_{0. 12}O₂ | 8 | 3.51 | 12.59 | 0.6 | 2.1 |
| Comparative Example 7 | Na_{0.80}Mn_{0.49}Fe_{0.2}Ni_{0.2}B_{0.01}Li_{0.1} O₂ | 11 | 3.56 | 12.57 | 0.6 | 2.2 |
| Comparative Example 8 | Na_{0.81}Mn_{0.49}Fe_{0.2}Ni_{0.2}Al_{0.01}Mg _{0.1}O₂ | 9 | 3.55 | 12.68 | 0.6 | 2.3 |

**Table 2**

| Serial Number | Interlayer distance | I₁/I₀ | First-cycle coulombic efficiency | Discharge specific capacity | Cyclic 50-cycle capacity retention rate |
|---|---|---|---|---|---|
| Example 1 | 5.36 Å | 0.40 | 99% | 164 mAh/g | 94% |
| Example 2 | 5.37 Å | 0.58 | 98% | 163 mAh/g | 91% |
| Example 3 | 5.35 Å | 0.32 | 99% | 161 mAh/g | 89% |
| Example 4 | 5.36 Å | 0.44 | 98% | 161 mAh/g | 88% |
| Example 5 | 5.36 Å | 0.59 | 99% | 162 mAh/g | 91% |
| Example 6 | 5.39 Å | 0.55 | 98% | 162 mAh/g | 89% |
| Example 7 | 5.35 Å | 0.42 | 98% | 160 mAh/g | 90% |
| Example 8 | 5.36 Å | 0.33 | 99% | 157 mAh/g | 92% |
| Example 9 | 5.37 Å | 0.45 | 98% | 177 mAh/g | 91% |
| Example 10 | 5.35 Å | 0.32 | 99% | 162 mAh/g | 91% |
| Example 11 | 5.34 Å | 0.31 | 98% | 162 mAh/g | 88% |
| Example 12 | 5.38 Å | 0.43 | 99% | 161 mAh/g | 90% |
| Example 13 | 5.34 Å | 0.32 | 98% | 160 mAh/g | 89% |
| Example 14 | 5.39 Å | 0.31 | 99% | 162 mAh/g | 90% |
| Example 15 | 5.34 Å | 0.54 | 99% | 160 mAh/g | 89% |
| Example 16 | 5.39 Å | 0.23 | 99% | 156 mAh/g | 89% |
| Example 17 | 5.35 | 0.38 | 99% | 168 mAh/g | 93% |
| Example 18 | 5.34 Å | 0.35 | 99% | 171 mAh/g | 89% |
| Example 19 | 5.35 Å | 0.43 | 98% | 161 mAh/g | 90% |
| Example 20 | 5.36 Å | 0.41 | 99% | 160 mAh/g | 90% |
| Example 21 | 5.35 Å | 0.23 | 98% | 156 mAh/g | 88% |
| Example 22 | 5.41 Å | 0.31 | 99% | 161 mAh/g | 91% |
| Example 23 | 5.36 Å | 0.45 | 98% | 162 mAh/g | 89% |
| Example 24 | 5.35 Å | 0.36 | 98% | 160 mAh/g | 90% |
| Comparative Example 1 | 5.36 Å | 0.35 | 87% | 157 mAh/g | 79% |
| Comparative Example 2 | 5.38 Å | 0.41 | 88% | 157 mAh/g | 77% |
| Comparative Example 3 | 5.36 Å | 0.13 | 93% | 149 mAh/g | 78% |
| Comparative Example 4 | 5.36 Å | 0.34 | 99% | 144 mAh/g | 86% |
| Comparative Example 5 | 5.35 Å | 0.36 | 98% | 152 mAh/g | 86% |
| Comparative Example 6 | 5.36 Å | 0.31 | 99% | 153 mAh/g | 86% |
| Comparative Example 7 | 5.35 Å | 0.38 | 92% | 157 mAh/g | 79% |
| Comparative Example 8 | 5.37 Å | 0.14 | 93% | 148 mAh/g | 71% |

According to the data in Table 2 and the comparison between Fig.1 and Fig. 2, it can be seen that the first-cycle coulombic efficiency of Example 1 is relatively high, and the co-doping of the Q element containing d orbital electrons and the C element with a high ionic potential can enable the hole generated due to the loss of electrons of oxygen under a high voltage to be relatively stable, thereby inhibiting oxygen losses; and in Comparative example 1 of the C element with a high ionic potential, the hole generated due to the loss of electrons of oxygen under the high voltage cannot be effectively stabilized, resulting in an irreversible oxygen evolution reaction, and low first-cycle coulombic efficiency. Moreover, according to the data comparison of Example 1, Comparative Example 2 and Comparative Example 3, it can be seen that when the ratio of the Q element to the C element is within the scope specified in the present application, it is more effective to improve the discharge specific capacity, the coulombic efficiency and the cycle stability.

In addition, according to the comparison of Fig. 4 and Fig. 5, it can be seen that there is no obvious crack on the particle surface of the layered oxide of Example 1 after cycling of 50 cycles in Fig. 4; and there is no obvious crack on the particle surface of the layered oxide of Comparative Example 1 after cycling of 50 cycles in Fig. 5, indicating serious element losses.

In particular, the technical features mentioned in the various examples may be combined in any manner as long as there is no structural conflict. The present application is not limited to the specific examples disclosed herein, but includes all technical solutions falling within the scope of the claims.

## Claims

1. A layered oxide, comprising an oxide with the general formula NaₓMn_{y}AₐQ_{b}C_{c}O₂, wherein A contains Fe and Ni; Q is one or more of transition metal elements containing 3d or 4d orbital electrons except Fe and Ni; C is one or two of Al and B, 0.66<x≤1, 0.2≤y≤0.6, 0.3<a<0.6, 0< b<0.2, 0<c≤0.1, and 1≤b/c≤100.

2. The layered oxide according to claim 1, wherein the Q is selected from one or more of the group consisting of Cu, Zn, Y and Ti.

3. The layered oxide according to claim 1 or 2, wherein the phase state of the layered oxide is an O3 phase, and the space group is R3̅m

4. The layered oxide according to any one of claims 1 to 3, wherein an interlayer distance d₀₀₃ of a (003) crystal face of the layered oxide is 0.53 nm to 0.55 nm.

5. The layered oxide according to any one of claims 1 to 4, wherein the intensity of a (003) characteristic peak in an X-ray diffraction spectrum of the layered oxide before soaking is I0, the intensity of the (003) characteristic peak in the X-ray diffraction spectrum of the layered oxide after 24 h room-temperature soaking in water is I1, and I1/I0≤0.2.

6. The layered oxide according to any one of claims 1 to 5, wherein the pH value of an aqueous solution of the layered oxide with a mass concentration of 10% is between 11 and 13.

7. The layered oxide according to any one of claims 1 to 6, wherein the volume average particle diameter Dᵥ₅₀ of the layered oxide is 3 µm to 30 µm, optionally, 5 µm to 15 µm.

8. The layered oxide according to any one of claims 1 to 7, wherein the specific surface area BET of the layered oxide is 0.1 m²/g to 5 m²/g, optionally, 0.3 m²/g~3m²/g.

9. The layered oxide according to any one of claims 1 to 8, wherein the tap density of the layered oxide is 1 g/cm³to 3 g/cm³, optionally, 1.5 g/cm³ to 2.5

10. The layered oxide according to any one of claims 1 to 9, wherein the powder compaction density of the layered oxide under the pressure of 300 MPa is 3.0 g/cm³ to 4.0

11. A preparation method of a layered oxide, comprising:
step S1, mixing a Na source, a Mn source, an A source, a Q source and a C source to obtain a precursor powder, wherein the Na source, the Mn source, the A source, the Q source and the C source are mixed according to the molar ratio of Na:Mn:A:Q:C being (0.85-1.2):(0.2-0.6):(0.3-0.6): (0-0.2): (0-0.1), the mole number of the Q and the C is not 0, an A element in the A source contains Fe and Ni, a Q element in the Q source is one or more of transition metal elements containing 3d or 4d orbital electrons except Fe and Ni, and a C element in the C source is one or two of Al and B; and
step S2: calcining the precursor powder in an oxidizing atmosphere and crushing the resulting material to obtain the layered oxide,
wherein optionally, step S1 implements the mixing by a ball milling or mechanical stirring method;
optionally, the Na source is selected from one or more of the group consisting of Na₂CO₃, NaHCO₃, NaOH and Na₂O₂;
optionally, the Mn source is selected from one or more of the group consisting of Mn₂O₃, Mn₃O₄, MnO and MnO₂;
optionally, the A source is selected from one or more of the group consisting of A oxides and salts containing the A element, and the A element contains Fe and Ni;
optionally, the Q source is one or more of the group consisting of Q oxides and salts containing the Q element; optionally, the Q element is selected from one or more of the group consisting of Cu, Zn, Y and Ti; and
optionally, the C source is one or more of the group consisting of C oxides and salts containing the C element.

12. The preparation method according to claim 11, wherein the oxidizing atmosphere is selected from air, oxygen, mixed gas of air and oxygen, and mixed gas of oxygen and inert gas;
optionally, the temperature of the calcination is 700°C to 1000°C, and the heat preservation time of the calcination is 10 h to 30 h;
optionally, step S2 comprises a first calcination stage and a second calcination stage sequentially performed, the calcination temperature in the first calcination stage is 400°C to 900°C, and the heat preservation time in the first calcination stage is 2 h to 20 h; and the calcination temperature in the second calcination stage is 700°C to 1000°C, and the heat preservation time in the second calcination stage is 10 h to 30 h.

13. A positive electrode sheet, comprising a positive electrode current collector and a positive electrode film layer arranged on at least one surface of the positive electrode current collector, wherein the positive electrode film layer comprises a positive electrode active material, and the positive electrode active material comprises the layered oxide according to any one of claims 1 to 10, or the layered oxide prepared by the preparation method according to claim 11 or 12; and optionally, based on the total weight of the positive electrode film layer, the content of the layered oxide in the positive electrode film layer is 60 wt% or above, optionally, 80 wt% to 98 wt%.

14. A secondary battery (5), comprising the layered oxide according to any one of claims 1 to 10, or the layered oxide prepared by the preparation method according to claim 11 or 12, or the positive electrode sheet according to claim 13.

15. An electrical apparatus, comprising a secondary battery (5), wherein the secondary battery (5) is selected from the secondary battery (5) according to claim 14.

## Patentansprüche

1. Schichtoxid, umfassend ein Oxid mit der allgemeinen Formel NaₓMn_{y}AₐQ_{b}C_{c}O₂, wobei A Fe und Ni enthält; Q für ein oder mehrere Übergangsmetallelemente mit 3d- oder 4d-Orbital-Elektronen außer Fe und Ni steht; C für eines oder zwei von Al und B steht, 0,66<x≤1, 0,2≤y≤0,6, 0,3≤a≤0,6, 0<b<0,2 0<c≤0,1 und 1≤b/c≤100.

2. Schichtoxid nach Anspruch 1, wobei das Q aus einem oder mehreren aus der Gruppe bestehend aus Cu, Zn, Y und Ti ausgewählt ist.

3. Schichtoxid nach Anspruch 1 oder 2, wobei der Phasenzustand des Schichtoxids eine O3-Phase ist und die Raumgruppe R3m ist.

4. Schichtoxid nach einem der Ansprüche 1 bis 3, wobei ein Zwischenschichtabstand d₀₀₃ einer (003)-Kristallfläche des Schichtoxids 0,53 nm bis 0,55 nm beträgt.

5. Schichtoxid nach einem der Ansprüche 1 bis 4, wobei die Intensität eines charakteristischen (003)-Peaks in einem Röntgenbeugungsspektrum des Schichtoxids vor dem Tränken I0 ist, die Intensität des charakteristischen (003)-Peaks in dem Röntgenbeugungsspektrum des Schichtoxids nach 24 h Tränken in Wasser bei Raumtemperatur I1 ist und I1/I0≥0,2 ist.

6. Schichtoxid nach einem der Ansprüche 1 bis 5, wobei der pH-Wert einer wässrigen Lösung des Schichtoxids mit einer Massenkonzentration von 10 % zwischen 11 und 13 liegt.

7. Schichtoxid nach einem der Ansprüche 1 bis 6, wobei der volumenmittlere Teilchendurchmesser Dᵥ₅₀ des Schichtoxids 3 µm bis 30 µm, gegebenenfalls 5 µm bis 15 µm, beträgt.

8. Schichtoxid nach einem der Ansprüche 1 bis 7, wobei die spezifische BET-Oberfläche des Schichtoxids 0,1 m²/g bis 5 m²/g, gegebenenfalls 0,3 m²/g~3 m²/g, beträgt.

9. Schichtoxid nach einem der Ansprüche 1 bis 8, wobei die Rütteldichte des Schichtoxids 1 g/cm³ bis 3 g/cm³, gegebenenfalls 1,5 g/cm³ bis 2,5 g/cm³, beträgt.

10. Schichtoxid nach einem der Ansprüche 1 bis 9, wobei die Pulverkompaktierungsdichte des Schichtoxids unter dem Druck von 300 MPa 3,0 g/cm³ bis 4,0 g/cm³ beträgt.

11. Verfahren zur Herstellung eines Schichtoxids, umfassend:
Schritt S1, Mischen einer Na-Quelle, einer Mn-Quelle, einer A-Quelle, einer Q-Quelle und einer C-Quelle unter Bildung eines Vorläuferpulvers, wobei die Na-Quelle, die Mn-Quelle, die A-Quelle, die Q-Quelle und die C-Quelle gemäß dem Molverhältnis von Na:Mn:A:Q:C von (0,85-1,2):(0,2-0,6):(0,3-0,6): (0-0,2): (0-0,1) gemischt werden, die Molzahl des Q und des C nicht 0 ist, ein A-Element in der A-Quelle Fe und Ni enthält, es sich bei einem Q-Element in der Q-Quelle um ein oder mehrere Übergangsmetallelemente mit 3d- oder 4d-Orbital-Elektronen außer Fe und Ni handelt, und es sich bei einem C-Element in der C-Quelle um eines oder zwei von Al und B handelt; und
Schritt S2: Calcinieren des Vorläuferpulvers in einer oxidierenden Atmosphäre und Zerkleinern des resultierenden Materials unter Erhalt des Schichtoxids,
wobei gegebenenfalls in Schritt S1 das Mischen durch Kugelmahlen oder mechanisches Rühren durchgeführt wird;
gegebenenfalls die Na-Quelle aus einem oder mehreren aus der Gruppe bestehend aus Na₂CO₃, NaHCO₃, NaOH und Na₂O₂ ausgewählt wird;
gegebenenfalls die Mn-Quelle aus einem oder mehreren aus der Gruppe bestehend aus Mn₂O₃, Mn₃O₄, MnO und MnO₂ ausgewählt wird;
gegebenenfalls die A-Quelle aus einem oder mehreren aus der Gruppe bestehend aus A-Oxiden und -Salzen, die das A-Element enthalten, ausgewählt wird und das A-Element Fe und Ni enthält; es sich gegebenenfalls bei der Q-Quelle um eines oder mehrere aus der Gruppe bestehend aus Q-Oxiden und -Salzen, die das Q-Element enthalten, handelt; gegebenenfalls das Q-Element aus einem oder mehreren aus der Gruppe bestehend aus Cu, Zn, Y und Ti ausgewählt wird; und
es sich gegebenenfalls bei der C-Quelle um eines oder mehrere aus der Gruppe bestehend aus C-Oxiden und -Salzen, die das C-Element enthalten, handelt.

12. Herstellungsverfahren nach Anspruch 11, wobei die oxidierende Atmosphäre aus Luft, Sauerstoff, Mischgas aus Luft und Sauerstoff und Mischgas aus Sauerstoff und Inertgas ausgewählt wird;
gegebenenfalls die Temperatur der Calcinierung 700 °C bis 1000 °C beträgt und die Wärmekonservierungszeit der Calcinierung 10 h bis 30 h beträgt;
gegebenenfalls Schritt S2 eine erste Calcinierungsstufe und eine zweite Calcinierungsstufe umfasst, die nacheinander durchgeführt werden, die Calcinierungstemperatur in der ersten Calcinierungsstufe 400 °C bis 900 °C beträgt und die Wärmekonservierungszeit in der ersten Calcinierungsstufe 2 h bis 20 h beträgt; und die Calcinierungstemperatur in der zweiten Calcinierungsstufe 700 °C bis 1000 °C beträgt und die Wärmekonservierungszeit in der zweiten Calcinierstufe 10 h bis 30 h beträgt.

13. Positivelektrodenplatte, umfassend einen Positivelektroden-Stromsammler und eine Positivelektroden-Filmschicht, die auf mindestens einer Oberfläche des Positivelektroden-Stromsammlers angeordnet ist, wobei die Positivelektroden-Filmschicht ein Positivelektroden-Aktivmaterial umfasst und das Positivelektroden-Aktivmaterial des Schichtoxid nach einem der Ansprüche 1 bis 10 oder das durch das Herstellungsverfahren nach Anspruch 11 oder 12 hergestellte Schichtoxid umfasst und gegebenenfalls der Gehalt des Schichtoxids in der Positivelektroden-Filmschicht, bezogen auf das Gesamtgewicht der Positivelektroden-Filmschicht, 60 Gew.-% oder mehr, gegebenenfalls 80 Gew.-% bis 98 Gew.-%, beträgt.

14. Sekundärbatterie (5), umfassend das Schichtoxid nach einem der Ansprüche 1 bis 10 oder das durch das Herstellungsverfahren nach Anspruch 11 oder 12 hergestellte Schichtoxid oder die Positivelektrodenplatte nach Anspruch 13.

15. Elektrische Vorrichtung, umfassend eine Sekundärbatterie (5), wobei die Sekundärbatterie (5) aus der Sekundärbatterie (5) nach Anspruch 14 ausgewählt ist.

## Revendications

1. Oxyde feuilleté, comprenant un oxyde de formule générale NaₓMn_{y}AₐQ_{b}C_{c}O₂, dans laquelle A contient Fe et Ni ; Q représente un ou plusieurs éléments métaux de transition contenant des électrons d'orbitale 3d ou 4d, à l'exception de Fe et Ni ; C représente un ou deux éléments parmi Al et B, 0,66 < x ≤ 1, 0,2 ≤ y ≤ 0,6, 0,3 ≤ a ≤ 0,6, 0 < b ≤ 0,2, 0 < c ≤ 0,1 et 1 ≤ b/c ≤ 100.

2. Oxyde feuilleté selon la revendication 1, Q étant l'un ou plusieurs parmi Cu, Zn, Y et Ti.

3. Oxyde feuilleté selon la revendication 1 ou 2, l'état de phase de l'oxyde feuilleté étant une phase O3 et le groupe spatial étant R3m.

4. Oxyde feuilleté selon l'une quelconque des revendications 1 à 3, la distance intercouche d₀₀₃ d'une face cristalline (003) de l'oxyde feuilleté étant comprise entre 0,53 nm et 0,55 nm.

5. Oxyde feuilleté selon l'une quelconque des revendications 1 à 4, l'intensité d'un pic caractéristique (003) dans un diagramme de diffraction des rayons X de l'oxyde feuilleté avant trempage étant I0, l'intensité d'un pic caractéristique (003) dans le diagramme de diffraction des rayons X de l'oxyde feuilleté après 24 h de trempage dans l'eau à température ambiante étant I1, et I1/I0 ≥ 0,2.

6. Oxyde feuilleté selon l'une quelconque des revendications 1 à 5, le pH d'une solution aqueuse d'oxyde feuilleté à une concentration massique de 10 % étant compris entre 11 et 13.

7. Oxyde feuilleté selon l'une quelconque des revendications 1 à 6, le diamètre de particule moyen en volume Dᵥ₅₀ étant compris entre 3 µm et 30 µm, facultativement entre 5 µm et 15 µm.

8. Oxyde feuilleté selon l'une quelconque des revendications 1 à 7, la surface spécifique BET de l'oxyde feuilleté étant comprise entre 0,1 m²/g et 5 m²/g, facultativement entre 0,3 m²/g et 3 m²/g.

9. Oxyde feuilleté selon l'une quelconque des revendications 1 à 8, la masse volumique après tassement de l'oxyde feuilleté étant comprise entre 1 g/cm³ et 3 g/cm³, facultativement entre 1,5 g/cm³ et 2,5

10. Oxyde feuilleté selon l'une quelconque des revendications 1 à 9, la masse volumique après compactage de la poudre d'oxyde feuilleté sous une pression de 300 MPa étant comprise entre 3,0 g/cm³ et 4,0

11. Procédé de préparation d'un oxyde feuilleté, comprenant :
étape S1, mélange d'une source de Na, d'une source de Mn, d'une source de A, d'une source de Q et d'une source de C pour obtenir une poudre précurseur, la source de Na, la source de Mn, la source de A, la source de Q et la source de C étant mélangées selon un rapport molaire Na:Mn:A:Q:C étant (0,85 à 1,2):(0,2 à 0,6):(0,3 à 0,6): (0 à 0,2): (0 à 0,1), le nombre de moles de Q et de C étant différent de 0, un élément A dans la source de A contenant Fe et Ni, un élément Q dans la source de Q étant un ou plusieurs éléments métaux de transition contenant des électrons d'orbitale 3d ou 4d, à l'exception de Fe et Ni, et un élément C dans la source de C étant un ou deux éléments parmi A1 et B ; et
étape S2 : calcination de la poudre précurseur dans une atmosphère oxydante et broyage du matériau résultant pour obtenir l'oxyde feuilleté,
dans lequel, facultativement, l'étape S1 met en œuvre le mélange par un procédé de broyage à boulets ou d'agitation mécanique ;
facultativement, la source de Na est l'un ou plusieurs parmi Na₂CO₃, NaHCO₃, NaOH et Na₂O₂ ;
facultativement, la source de Mn est l'un ou plusieurs parmi Mn₂O₃, Mn₃O₄, MnO et MnO₂ ;
facultativement, la source de A est l'un ou plusieurs parmi les oxydes de A et les sels contenant l'élément A, et l'élément A contient Fe et Ni ;
facultativement, la source de Q est l'un ou plusieurs parmi les oxydes de Q et les sels contenant l'élément Q ; facultativement, l'élément Q est l'un ou plusieurs parmi Cu, Zn, Y et Ti ; et
facultativement, la source de C est l'un ou plusieurs parmi les oxydes de C et les sels contenant l'élément C.

12. Procédé de préparation selon la revendication 11, dans lequel l'atmosphère oxydante est choisie parmi l'air, l'oxygène, un mélange gazeux d'air et d'oxygène et un mélange gazeux d'oxygène et de gaz inerte ;
facultativement, la température de calcination est comprise entre 700 °C et 1 000 °C, et la durée de maintien à chaud est comprise entre 10 h et 30 h ;
facultativement, l'étape S2 comprend une première étape de calcination et une deuxième étape de calcination réalisées séquentiellement, la température de calcination de la première étape de calcination est comprise entre 400 °C et 900 °C, et la durée de maintien à chaud de la première étape de calcination est comprise entre 2 h et 20 h ; et la température de calcination de la deuxième étape de calcination est comprise entre 700 °C et 1 000 °C, et la durée de maintien à chaud de la deuxième étape de calcination est comprise entre 10 h et 30 h.

13. Feuille d'électrode positive, comprenant un collecteur de courant d'électrode positive et une couche de film d'électrode positive disposée sur au moins une surface du collecteur de courant d'électrode positive, la couche de film d'électrode positive comprenant un matériau actif d'électrode positive, le matériau actif d'électrode positive comprenant l'oxyde feuilleté selon l'une quelconque des revendications 1 à 10, ou l'oxyde feuilleté préparé par le procédé de préparation selon la revendication 11 ou 12 ; et facultativement, par rapport au poids total de la couche de film d'électrode positive, la teneur en oxyde feuilleté de la couche de film d'électrode positive est supérieure ou égale à 60 % en poids, facultativement comprise entre 80 % et 98 % en poids.

14. Batterie secondaire (5), comprenant l'oxyde feuilleté selon l'une quelconque des revendications 1 à 10, ou l'oxyde feuilleté préparé par le procédé de préparation selon la revendication 11 ou 12, ou la feuille d'électrode positive selon la revendication 13.

15. Appareil électrique, comprenant une batterie secondaire (5), la batterie secondaire (5) étant la batterie secondaire (5) selon la revendication 14.
